# FASCICULE DE BREVET EUROPEEN

(11) **EP 3 850 118 B1**
(45) Date de publication et mention de la délivrance du brevet: **02.11.2022**
(21) Numéro de dépôt: 19790644.9
(22) Date de dépôt: 13.09.2019
(51) Int. Cl.: C22C 19/05, B22F 3/105, B33Y 70/00

(54) **SUPERALLIAGES A BASE DE NICKEL**
SUPERLEGIERUNGEN AUF NICKELBASIS
NICKEL-BASED SUPERALLOYS

(30) Priorité: 13.09.2018 FR 1858223
(43) Date de publication de la demande: 21.07.2021
(73) Titulaire: Aubert & Duval, 75015 Paris (FR); SAFRAN, 75015 Paris (FR)
(72) Inventeur: BELAYGUE, Philippe, 77550 MOISSY-CRAMAYEL (FR); CORNU, Daniel, André, Jean, 77550 MOISSY-CRAMAYEL (FR); CROZET, Coraline, 63870 ORCINES (FR); GIRAUD, Rémi, 77550 MOISSY-CRAMAYEL (FR); HERVIER, Zéline, 77550 MOISSY-CRAMAYEL (FR); LARROUY, Baptiste, Romain, 77550 MOISSY-CRAMAYEL (FR); MAYER, Charlotte, 63000 CLERMONT FERRAND (FR); MONTAGNON, Jacques, 94210 LA VARENNE (FR)
(74) Mandataire: Cabinet Beau de Loménie
(86) Numéro de dépôt international: PCT/FR2019/052137
(87) Numéro de publication internationale: WO 2020/053533

(56) Documents cités:
- WO-A1-2011/020976
- WO-A1-2015/096980
- US-A- 3 619 182
- M. CLOOTS, P.J. UGGOWITZER, K. WEGENER: "Investigations on the microstructure and crack formation of IN/*(LC samples processed by selective laser melting using Gaussian and doughnut profiles", MATERIALS AND DESIGN, vol. 89, 2016, XP002791169,

## Description

La présente invention concerne le domaine des superalliages à base de nickel pour application haute température, en particulier adaptés à la fabrication de pièces par fabrication additive, destinés par exemple aux turbines des moteurs d'avion, aux turbines à gaz et / ou aux turbines de l'industrie marine.

Les superalliages à base de nickel sont les matériaux les plus performants utilisés aujourd'hui pour la fabrication des parties chaudes des turboréacteurs aéronautiques car leurs compositions leur procurent une grande résistance mécanique à haute température. Les deux principales caractéristiques demandées jusqu'à maintenant à ces alliages, pour ces applications spécifiques sont donc une bonne résistance au fluage à des températures pouvant aller jusqu'à 1050° C - 1100°C et une très bonne tenue à la corrosion à chaud. Un de ces superalliages est par exemple décrit par le brevet US3459545 comme ayant la composition suivante en % en poids :
15-18 Cr, 8-11 Co, 0,75-2,2 Mo, 1,8-3 W, 3-4 Al, 3-4 Ti, 0,5-2 Nb, 1-3 Ta, 0,1-0,2 C, 0,01-0,05 B, 0,01-0,2 Zr, solde Ni et les impuretés inévitables. De tous les superalliages décrits dans ce brevet, seul, l'alliage connu sous la désignation Inconel^{®} 738 LC (IN738LC) a été commercialisé pour l'application pièces de turboréacteur. Il s'agit de l'alliage de référence le plus couramment utilisé dans ce domaine, en particulier pour la fabrication de pièces telles que les redresseurs de flux.

Ce superalliage a ainsi la composition suivante en % en poids:
15,7-16,3 Cr, 8-9 Co, 1,5-2 Mo, 2,4-2,8 W, 3,2-3,7 Al, 3,2-3,7 Ti, 0,6-1,1 Nb, 1,5-2 Ta, 0,09-0,13 C, 0,007-0,012 B, 0,03-0,08 Zr, max 0,3 Si, solde Ni et les impuretés inévitables.

Les objectifs ambitieux fixés pour les turbines à gaz aéronautiques, en termes d'augmentation de rendement et de diminution de consommation spécifique, ont une forte influence sur la conception des moteurs et tendent à augmenter sans cesse les températures et les contraintes d'emploi des différents matériaux, en particulier celles des superalliages à base de nickel. Cela implique de développer de nouveaux designs pour les parties chaudes des moteurs pour lesquels les procédés de fabrication additive sont particulièrement indiqués.

Les superalliages à base de nickel sont des matériaux à matrice base nickel austénitique γ (cubique à faces centrées, donc plutôt ductile) renforcée par des précipités durcissant γ' (de structure L12) cohérente avec la matrice, c'est-à-dire ayant une maille atomique très proche de celle-ci. Afin d'obtenir de meilleures performances pour ces superalliages, il est intéressant de renforcer leurs teneurs en phase γ' aux températures d'emploi. Toutefois de tels superalliages ont tendance à développer des microfissures et/ou macro fissures, en particulier au cours de l'étape de fabrication additive ou lors des étapes de traitement thermique ultérieures. On entend par micro fissures, les fissures apparaissant au moment du dépôt additif, et par macro fissures, les fissures apparaissant au cours du traitement thermique. Cette dénomination découle du fait que les micro fissures sont en général sensiblement plus petites que les macro fissures mais on ne peut exclure que les micro fissures soient de taille comparable aux macro fissures.

La demande WO2015/09698OA1 décrit une composition de superalliage à base de nickel à forte teneur en phase durcissante γ' dont la teneur en Zr et/ou Si a été abaissée (0,004 ≤Zr<0,03 et 0,001 ≤Si<0,03 en % en poids, en particulier ayant une teneur maximum en Si de 0,02 et/ou en Zr de 0,02) et ayant une taille de particule inférieure à 150 µm afin de pouvoir l'utiliser dans un procédé de fabrication additive telle que la fusion sélective par laser ou la fusion laser par faisceau d'électrons.

Cette composition présente une tendance diminuée à la microfissuration pendant la fabrication additive sur lit de poudre. Toutefois l'abaissement de la teneur en Zr et Si ne résout pas la problématique des macro-fissurations liées au refroidissement après fusion par le laser et au traitement thermique post fabrication additive. Il ne conduit pas non plus à la facilitation du traitement thermique par des modifications de composition.

L'article de R. Engeli et al. (Journal of Materials Processing Technology 229 (2016) 484-491) enseigne également que la teneur en Si a une grande influence sur la tenue à la fissuration des compositions de superalliage à base de nickel de type IN738LC. Toutefois, malgré les très bons résultats d'abaissement de la densité de fissures dans la pièce brute de lasage avec l'abaissement de la teneur en Si, ce matériau ne résout pas la problématique des macro-fissurations liées au refroidissement après fusion par le laser et au traitement thermique post fabrication additive. Il ne conduit pas non plus à la facilitation du traitement thermique par des modifications de composition.

L'article de P. Wangyao et al. (Advanced Materials Research Vols 1025-1026 (2014), 395-402) vise à l'amélioration de la microstructure et de la dureté de l'IN738C (qui correspond à l'Inconel^{®} 738 ayant de plus fortes teneurs en carbones que l'IN738LC, ici de 0,17%) par l'ajout d'Al et la modification de la température de mise en solution. Toutefois, l'augmentation seule de la teneur en Al sans modification du reste de la composition de l'alliage (qui a tout de même une teneur en Nb excessivement élevée de 2%, ce qui est au-delà de la fourchette standard), induit une augmentation de la précipitation de la phase γ'.

Dans cette étude, l'augmentation notable de la dureté de l'alliage avec addition d'Al, après traitement thermique est liée à la teneur accrue en précipités γ', qui pourrait avoir des conséquences très néfastes en termes de fissuration sur une pièce brute de lasage et n'est pas souhaitable pour les applications.

L'article de M. Cloots et al., "Investigations on the microstructure and crack formation of IN/*(LC samples processed by selective laser melting using Gaussian and dougnut profiles", MATERIALS AND DESIGN, 771-783, vol. 89, 2006 XP002791169, divulgue un alliage à base de nickel sous forme de poudre basé sur un alliage standard IN738LC.

Les inventeurs se sont ainsi aperçus de façon surprenante que pour obtenir une pièce en superalliage à base de nickel par fabrication additive présentant moins de macro fissures même après un traitement thermique post fabrication, et ayant des caractéristiques mécaniques équivalentes à l'Inconel^{®} 738 LC, il était nécessaire d'augmenter la teneur en molybdène et/ou en tungstène, en particulier en molybdène et en tungstène de la composition du superalliage utilisé.

De plus, ils se sont aperçus qu'afin d'obtenir une pièce en superalliage à base de nickel par fabrication additive présentant en outre moins de micro fissures, même après un traitement thermique post fabrication, et ayant des caractéristiques mécaniques équivalentes à l'Inconel^{®} 738 LC, il était nécessaire non seulement de diminuer la teneur en zirconium et éventuellement en silicium, mais également de diminuer la teneur en titane, en niobium et en carbone de la composition du superalliage utilisé.

En effet l'ajout de molybdène et de tungstène, qui sont des éléments lourds principalement présents dans la matrice austénitique va d'une part renforcer la matrice et d'autre part ralentir la précipitation de la phase durcissante γ'.

En outre, la diminution de la teneur en titane et en niobium a pour effet direct de diminuer le ratio (Ti + Nb + Ta)/Al donc de diminuer le caractère durcissant de la phase γ'. La diminution de la teneur en titane induit également une baisse de la température de solvus γ' et donc de la proportion de γ' à température donnée. La diminution en carbone et en niobium va de son côté diminuer la proportion de carbures NbC formés pendant la solidification, lors de l'étape de fabrication additive. Ces deux modifications de composition (baisse de Ti et Nb et baisse de C et Nb) ont pour but de limiter la microfissuration liée à la micro ségrégation et à la précipitation de γ' et de NbC à l'étape de fabrication additive.

Il est certes vrai que la demande WO2015/09698OA1 décrit une composition de superalliage à base de nickel ayant une teneur en Ti de 2,2-3,7, c'est à dire pouvant être très basse.

Toutefois l'homme du métier comprend bien qu'il s'agit d'une erreur évidente et manifeste puisque ce document indique également une teneur en Ti de l'IN738LC de 2,2-3,7, ce qui n'est pas la teneur standard (3,2-3,7) et que ce document n'enseigne à aucun moment qu'une teneur basse en Ti est importante pour éviter les fissurations. D'autre part, une limite inférieure à 2,2 va fortement baisser la température de solvus γ' et donc risque de limiter la température d'utilisation du matériau, ce qui n'est certainement pas un effet recherché.

La présente invention concerne donc un superalliage à base de nickel à forte teneur en phase γ' pour la fabrication de pièces par fabrication additive suivie d'un traitement thermique, caractérisé en ce que sa composition comprend, avantageusement est constituée essentiellement de, en particulier est constituée de, en pourcentages en poids de la composition totale:
Chrome : 15,5 - 16,5
Cobalt : 7,7 - 11, avantageusement 7,7 - 9 ;
du molybdène et du tungstène telle que la teneur en molybdène + tungstène = 5,5 - 7,5, avantageusement 6,2 - 7,5 ;
Aluminium : 2,9 - 4,3, avantageusement 3 - 4 ;
Titane : 2,6 - 3,2, avantageusement 2,6 - 3,1 ;
Tantale : 1,5 - 2,2 ;
Niobium : 0,3 - 1,1, avantageusement 0,3 - 0,5 ;
Carbone : 0,01 - 0,13, avantageusement 0,01 - 0,07 ;
Bore : 0,0005 - 0,015;
Zirconium : ≤ 0,01, avantageusement ≤ 0,009 ;
Hafnium : 0,0001 - 0,5, avantageusement 0,0001 - 0,2 ;
Silicium : ≤ 0,06, avantageusement ≤ 0,03 ;
Nickel : solde
ainsi que les impuretés inévitables.

La composition selon l'invention comprend donc, en % en poids par rapport au poids total de la composition, du chrome (Cr) en une teneur comprise dans la gamme 15,5 - 16,5, en particulier 15,5 - 16,0, plus particulièrement 15,5 - 15,8.

Il est nécessaire à la tenue à la corrosion à chaud. Il se retrouve préférentiellement dans la phase γ et participe au durcissement en solution solide de celle-ci.

La teneur en chrome est mesurée avec une incertitude de ±0,3, en particulier de ±0,2, avantageusement ±0,15.

La composition selon l'invention comprend en outre, en % en poids par rapport au poids total de la composition, du cobalt (Co) en une teneur comprise dans la gamme 7,7 - 11, en particulier 7,7 - 9, plus particulièrement 7,7 - 8,5.

Il participe au durcissement en solution solide de la phase γ dans laquelle il se retrouve, et influe sur la température de mise en solution de la phase γ' (température de solvus γ'). Une forte teneur en cobalt va abaisser la température de solvus de la phase γ' et faciliter l'homogénéisation de l'alliage par traitement thermique sans risquer de provoquer une brulure. Par ailleurs, une faible teneur en cobalt va augmenter la température de solvus de la phase γ' et permet d'obtenir une plus grande stabilité de la phase γ' à haute température ce qui est favorable à la résistance au fluage. Il convient donc de choisir un bon compromis entre une bonne aptitude à l'homogénéisation et une bonne tenue au fluage.

La teneur en cobalt est mesurée avec une incertitude de ±0,2, en particulier de ±0,1, avantageusement ±0,06.

La composition selon l'invention comprend de plus, en % en poids par rapport au poids total de la composition, du molybdène (Mo) et du tungstène (W) en une teneur molybdène + tungstène dans la gamme 5,5 - 7,5, avantageusement 5,7 - 7,5, plus avantageusement 6 - 7,5, en particulier 6,2 - 7,5.

Dans un mode de réalisation avantageux, la teneur en molybdène (Mo) de la composition selon l'invention, en % en poids par rapport au poids total de la composition, est comprise dans la gamme 2,5 - 3,5, avantageusement 2,7 - 3,5, plus particulièrement 2,7 - 3,0.

Le molybdène participe en effet au durcissement de la phase γ dans laquelle il se retrouve. Il va également ralentir la diffusion dans la matrice γ induisant ainsi un ralentissement de la précipitation de γ'.

La teneur en molybdène est ainsi augmentée par rapport au standard IN738LC afin de renforcer la matrice γ, tout en évitant une trop grande proportion qui aurait un effet néfaste sur la résistance à la corrosion à chaud.

La teneur en molybdène est mesurée avec une incertitude de ±0,03, en particulier de ±0,02, avantageusement ±0,01.

Dans un autre mode de réalisation, la teneur en tungstène (W) de la composition selon l'invention, en % en poids par rapport au poids total de la composition, est comprise dans la gamme 3 - 4, en particulier 3,5 - 4, plus particulièrement 3,6 - 4.

Le tungstène se répartit relativement également entre les deux phases γ et γ' et contribue ainsi au durcissement par solution solide des deux phases. De façon similaire au Mo, sa présence dans l'alliage permet de ralentir la diffusion et ainsi de ralentir la précipitation de γ'.Toutefois une teneur trop importante a un effet négatif sur la résistance à la corrosion à chaud.

La teneur en tungstène est donc augmentée par rapport au standard IN738LC afin de renforcer la matrice γ. Toutefois, il induit une diminution du solidus assez forte, sans modifier le solvus γ'.Il faut donc en limiter l'augmentation afin d'éviter les risques de brulure lors de la mise en solution de γ'.

La teneur en tungstène est mesurée avec une incertitude de ±0,04, en particulier de ±0,02, avantageusement ±0,01.

Dans encore un autre mode de réalisation, la teneur en molybdène (Mo) de la composition selon l'invention, en % en poids par rapport au poids total de la composition, est comprise dans la gamme 2,5 - 3,5, avantageusement 2,7 - 3,5, plus particulièrement 2,7 - 3,0 et la teneur en tungstène (W) de la composition selon l'invention, en % en poids par rapport au poids total de la composition, est comprise dans la gamme 3 - 4, en particulier 3,5 - 4, plus particulièrement 3,6 - 4.

La composition selon l'invention comprend également, en % en poids par rapport au poids total de la composition, de l'aluminium (Al) en une teneur comprise dans la gamme 2,9 - 4,3, avantageusement 3 - 4, particulièrement 3,1 - 3,8.

La teneur en Al a un effet direct sur la température de solvus γ' et donc la proportion de γ' à température donnée. Une teneur assez faible peut éviter la fissuration liée à la précipitation de γ' en en réduisant la proportion, alors qu'une forte teneur permet d'augmenter la proportion de γ' tout en abaissant son caractère durcissant. La teneur en Al permet de maintenir une proportion de γ' (taille et distribution) élevée tout en éliminant le risque de fissuration pendant le traitement thermique.

La teneur en aluminium est mesurée avec une incertitude de ±0,04, en particulier de ±0,02, avantageusement ±0,01.

La composition selon l'invention comprend en outre, en % en poids par rapport au poids total de la composition, du titane (Ti) en une teneur comprise dans la gamme 2,6 - 3,2, avantageusement 2,6 - 3,1.

Dans un mode de réalisation particulier, la teneur en titane est légèrement diminuée par rapport à la teneur de l'IN738LC standard. A teneur en aluminium constante, cela a pour effet direct de baisser la température de solvus γ' et donc la proportion de γ' à température donnée dans le but d'éviter la fissuration liée à la précipitation de γ'.Si la teneur en Al est augmentée, la proportion de γ' peut être maintenue au niveau de l'IN738LC et la diminution du ratio (Ti+Ta+Nb)/Al aura pour effet la diminution du caractère durcissant de la phase γ', éliminant ainsi le risque de fissuration lié à la précipitation de γ'.

La teneur en titane est mesurée avec une incertitude de ±0,04, en particulier de ±0,02.

La composition selon l'invention comprend de plus, en % en poids par rapport au poids total de la composition, du tantale (Ta) en une teneur comprise dans la gamme 1,5 - 2,2, avantageusement 1,7 - 2,2.

Le tantale se retrouve dans la phase γ', au même titre que le titane et a pour effet de renforcer la phase γ'.La teneur en tantale est mesurée avec une incertitude de ±0,02, en particulier de ±0,01.

La composition selon l'invention comprend par ailleurs, en % en poids par rapport au poids total de la composition, du niobium (Nb) en une teneur comprise dans la gamme 0,3 - 1,1, avantageusement 0,3 - 0,8, en particulier 0,3- 0,6, plus particulièrement 0,3 - 0,5.

Dans un mode avantageux, la teneur en Nb est abaissée par rapport à la teneur standard de l'IN738LC, ce qui vise à la diminution de la précipitation de carbures. La faible taille des grains issus de la fabrication additive induit un besoin amoindri en carbures, qui eux même peuvent être des sources de fissuration au refroidissement.

La teneur en niobium est mesurée avec une incertitude de ±0,005, en particulier de ±0,002.

La composition selon l'invention comprend également, en % en poids par rapport au poids total de la composition, du carbone (C) en une teneur comprise dans la gamme 0,01 - 0,13, avantageusement 0,01 - 0,09, en particulier 0,01 - 0,07, plus particulièrement 0,01 - 0,05, encore plus particulièrement 0,01 - 0,03.

Dans un mode avantageux, la teneur en carbone est abaissée par rapport à la teneur standard de l'IN738LC, ce qui vise à la diminution de la précipitation de carbures. La faible taille des grains issus de la fabrication additive induit un besoin amoindri en carbures, qui eux-mêmes peuvent être des sources de fissuration au refroidissement.

La teneur en carbone est mesurée avec une incertitude de ±0,003, en particulier de ±0,002.

La composition selon l'invention comprend également, en % en poids par rapport au poids total de la composition, du bore (B) en une teneur comprise dans la gamme 0,0005 - 0,015, en particulier 0,0005 - 0,005. Dans un mode avantageux, la teneur en bore est abaissée par rapport à la teneur standard de l'IN738LC, ce qui vise à limiter l'existence du système eutectique final γ/TiB₂, qui a tendance à faire chuter le solidus et augmente le risque de liquation des borures pendant l'étape de fabrication additive.

La teneur en bore est mesurée avec une incertitude d'environ 20%.

La composition selon l'invention comprend de plus, en % en poids par rapport au poids total de la composition, une teneur en zirconium (Zr) ≤ 0,01, avantageusement ≤ 0,009, en particulier < 0,004, plus particulièrement ≤ 0,003, encore plus particulièrement ≤ 0,0001.

La teneur en zirconium est ainsi abaissée par rapport à la teneur standard de l'IN738LC, ce qui a un effet bénéfique sur la fissuration par liquation et sur la fissuration à chaud ayant lieu durant l'étape de fabrication additive. La teneur en zirconium est mesurée avec une incertitude d'environ 20%. La composition selon l'invention comprend par ailleurs, en % en poids par rapport au poids total de la composition, du hafnium (Hf) en une teneur dans la gamme 0,0001 - 0,5, avantageusement 0,0001 - 0,2, plus avantageusement 0,0003 - 0,2, en particulier 0,1 - 0,5, plus particulièrement 0,1 - 0,2.

La teneur en hafnium permet de compenser l'effet néfaste de la diminution du Zr sur la résistance en température (fluage et corrosion notamment).

La teneur en hafnium est mesurée avec une incertitude d'environ 20%.

La composition selon l'invention comprend de plus, en % en poids par rapport au poids total de la composition, une teneur en silicium (Si) ≤0,06, avantageusement ≤0,03, en particulier ≤0,025, plus particulièrement ≤0,021.

La teneur en silicium est ainsi abaissée par rapport à la teneur standard de l'IN738LC, ce qui a un effet bénéfique sur la fissuration par liquation et sur la fissuration à chaud ayant lieu durant l'étape de fabrication additive.

La teneur en silicium est mesurée avec une incertitude d'environ 20%.

Ainsi donc, afin de supprimer l'apparition de micro fissures et de diminuer ou même avantageusement supprimer l'apparition des macro fissures, la composition du superalliage à base de nickel selon l'invention comprend :
- une teneur en zirconium et avantageusement en silicium abaissée par rapport à la teneur standard de l'IN738LC, ce qui a un effet bénéfique sur la fissuration par liquation et donc sur la fissuration à chaud ayant lieu durant l'étape de fabrication additive.
- avantageusement une teneur en titane et/ou en niobium légèrement diminuée par rapport à la teneur de l'IN738LC standard, ce qui a pour effet direct de baisser la température de solvus γ' et donc la proportion de γ' à température donnée à teneur en aluminium constante ; et de diminuer le caractère durcissant de la phase γ' à proportion maintenue, dans le but d'éliminer la fissuration liée à la précipitation de γ'.

- du hafnium afin de compenser la diminution en zirconium puisqu'une telle diminution a un effet néfaste sur la résistance au fluage en température.
- avantageusement une teneur en Nb et C abaissée par rapport à la teneur standard de l'IN738LC, ce qui vise à la diminution de la précipitation de carbures. La faible taille des grains issus de la fabrication additive induit un besoin amoindri en carbures, qui eux-mêmes peuvent être des sources de microfissuration pendant la fabrication additive.
- une teneur en Mo et/ou W augmentée par rapport à la teneur standard de l'IN738LC, ce qui vise à ralentir les vitesses de diffusion et à baisser les éléments γ' gènes, ainsi qu'à renforcer la matrice γ pour réduire drastiquement l'apparition de macro-fissures au traitement thermique.

Ainsi dans un mode de réalisation particulièrement avantageux, le superalliage à base de nickel selon la présente invention est caractérisé en ce que sa composition comprend, avantageusement en ce qu'elle est constituée essentiellement de, en particulier est constituée de, en pourcentages en poids de la composition totale:
Chrome : 15,5 - 16,5
Cobalt : 7,7 - 9 ;
du molybdène et du tungstène telle que la teneur en molybdène + tungstène = 6,2 - 7,5 ;
Aluminium 3 - 4 ;
Titane : 2,6 - 3,1 ;
Tantale : 1,5 - 2,2 ;
Niobium : 0,3 - 0,5 ;
Carbone : 0,01 - 0,07;
Bore : 0,0005 - 0,005 ;
Zirconium : ≤ 0,009 ;
Hafnium 0,0001 - 0,2 ;
Silicium : ≤ 0,03 ;
Nickel : solde
ainsi que les impuretés inévitables.

Les impuretés inévitables proviennent des étapes de fabrication de la poudre ou des impuretés présentes dans les matières premières utilisées pour la fabrication de la poudre. On retrouve toutes les impuretés classiques rencontrées dans les superalliages à base de nickel. En particulier elles sont choisies dans le groupe constitué par l'azote, l'oxygène, l'hydrogène, le plomb, le soufre, le phosphore, le fer, le manganèse, le cuivre, l'argent, le bismuth, le platine, le sélénium, l'étain, le magnésium et leurs mélanges. Elles peuvent constituer jusqu'à 0,15% en masse de l'alliage et ne représentent chacune pas plus de 0,05% en poids de la composition totale. De façon générale, la teneur des impuretés dans l'alliage est mesurée avec une incertitude de 20%.

La teneur en azote (N) en % en poids par rapport au poids total de la composition peut ainsi être ≤ 0,030, avantageusement ≤ 0,008, en particulier ≤ 0,006, plus particulièrement ≤ 0,005, plus avantageusement ≤ 0,002.

La limitation de la teneur en azote permet de limiter la présence de nitrures ou carbonitrures dans la pièce après lasage, qui peuvent nuire à certaines propriétés mécaniques. La teneur en azote est mesurée avec une incertitude de ±0,0008, en particulier de ±0,0004.

La teneur en oxygène (O) en % en poids par rapport au poids total de la composition peut ainsi être ≤ 0,030. De telles teneurs en oxygène peuvent paraitre surprenantes au regard des procédés conventionnels mais le fractionnement du métal sous forme de poudre induit un ratio surface/volume très élevé qui va tendre à fortement augmenter la teneur en oxygène de l'alliage. Celle-ci augmentera d'avantage si le procédé de fabrication des poudres n'est pas suffisamment contrôlé. L'oxygène peut avoir un rôle bénéfique dans cette limite de 0,03% sur la ductilité à chaud. La limitation de la teneur en oxygène à 0,03% permet de limiter la présence d'oxydes dans la pièce après lasage, qui sont néfastes aux propriétés mécaniques.

La teneur en oxygène est mesurée avec une incertitude de ±0,0007, en particulier de ±0,0005.

En particulier, la composition de la poudre selon la présente invention peut être choisie parmi l'un des 3 exemples indiqués dans le tableau 1 suivant.

**Tableau 1 : Exemples de composition de poudre pour superalliage à base de nickel en % en poids par rapport au poids total de la composition**

| | **Exemple 1** | **Exemple 2** | **Exemple 3** |
|---|---|---|---|
| **Ni + impuretés** | solde | Solde | Solde |
| **Cr** | 15,66±0,08 | 15,72±0,24 | 15,78±0,08 |
| **Co** | 7,81±0,05 | 7,86±0,12 | 8,58±0,06 |
| **Mo** | 2,84±0,02 | 2,90±0,03 | 2,97±0,03 |
| **W** | 3,70±0,02 | 3,81±0,04 | 3,80±0,02 |
| **Al** | 3,74±0,01 | 3,24±0,04 | 3,23±0,01 |
| **Ti** | 3,01±0,02 | 3,10±0,04 | 320±002 |
| **Ta** | 1,85±0,01 | 1,94±0,02 | 1,90±0,01 |
| **Nb** | 0,778±0,005 | 0,495±0,005 | 0,526±0,005 |
| **C** | 0,0870±0,0026 | 0,0230±0,0016 | 0,0434±0,0004 |
| **B** | 0,0140±0,0028 | 0,00056±0,00012 | 00044±00008 |
| **Zr** | 0,0078±0,0016 | 0,000098±0,000020 | 0,0008±0,0002 |
| **Hf** | 0,179±0,001 | 0,00017±0,00004 | 0,00014±0,00003 |
| **Si** | 0,0250±0,0050 | 0,0210±0,0042 | 0,0280±0,0050 |
| **O** | 0,0110±0,0007 | 0,0110±0,0007 | 0,0121±0,0001 |
| **N** | 0,0055±0,0004 | 0,0019±0,0004 | 0,0059±0,0001 |
| **S** | <0,0005±0,0001 | <0,0005±0,0001 | <0,00067±0,0001 |
| **P** | 0,000018+0,000004 | 0,0002±0,000004 | 0,00014±0,00001 |

L'exemple 1 comporte une augmentation des teneurs en Mo et W et une diminution de la teneur Ti par rapport au standard IN738LC. L'Al est monté à la limite supérieure de la fenêtre du standard IN738LC. Ces modifications visent, d'une part à ralentir les vitesses de diffusion afin de ralentir la précipitation de γ', et à baisser le caractère durcissant de la phase γ' d'autre part. En conséquence, la température de solvus γ' est abaissée de 20 à 30°C par rapport à l'IN738LC. Elle contient de plus, un ajout d'Hf par rapport au standard IN738LC afin de compenser l'abaissement du Zr par rapport au standard IN738LC et les potentielles conséquences néfastes sur la tenue en fluage du superalliage.

L'exemple 2 comprend en plus, une baisse des teneurs en Nb et C par rapport au standard IN738LC afin de diminuer la proportion de carbures de Nb et d'améliorer le comportement de la nuance au refroidissement, au cours de la fabrication additive. De plus, le bore est également abaissé afin d'éviter la précipitation de borures aux joints de grains et de limiter au maximum les phénomènes de liquation pendant la fabrication des pièces. L'exemple 3, comme l'exemple 2 est un exemple de réalisation suivant la composition revendiquée. Il se distingue de l'exemple 2 par sa teneur en B et C qui sont un peu supérieures à l'exemple 2 afin de confirmer la robustesse de la fenêtre de compositions revendiquée.

Dans un mode de réalisation avantageux, le superalliage à base de nickel selon l'invention se trouve sous la forme de poudre, avantageusement ayant une distribution de taille des particules (diamètre en nombre) comprise dans la gamme 15-53 µm, en particulier si elle est destinée à la fabrication de pièce par fusion sélective par laser (SLM). Traditionnellement pour ce type de coupes granulométriques, la limite inférieure de 15 µm, caractérisée par le D10 en nombre est contrôlée par diffraction laser (ASTM B822-17), et la coupe supérieure de 53 µm est contrôlée par tamisage. La pratique du contrôle de coupe granulométrique selon la norme ASTM B214-16 ou ISO 2591-1 de 1988 en vigueur autorise à contrôler des coupes jusqu'à 45 µm par tamisage. En dessous de cette limite, le contrôle par tamis n'est plus admis selon la norme et la caractérisation se fait par la valeur du D10 en nombre de la distribution mesurée par diffraction laser.

Dans un mode de réalisation avantageux, le superalliage à base de nickel selon l'invention se trouve sous la forme d'un fil, destiné à la mise en forme par dépôt de fil, selon les différents procédés possible (par arc, plasma, faisceau d'électron ou laser).

La présente invention concerne en outre un procédé de fabrication d'une poudre de superalliage à base de nickel selon l'invention comprenant les étapes suivantes :
a- mélange de matières premières élémentaires ou pré alliées,
b- fusion du mélange obtenue à l'étape a), avantageusement dans un four à induction sous vide (VIM),
c- atomisation au gaz, avantageusement à l'argon, du produit obtenu à l'étape b) de façon à obtenir une poudre, avantageusement majoritairement sphérique (c'est-à-dire sans angle vif),
d- tamisage de la poudre obtenue à l'étape c), avantageusement sous atmosphère inerte, de façon à obtenir la granulométrie visée.
e- récupération de la poudre obtenue.

La granulométrie de la poudre est ainsi adaptée en fonction de la technologie de fabrication additive ou du procédé de dépôt de poudre envisagé. Les gammes granulométriques utilisées pour les différents procédés de fabrication additive ou de dépôt de poudre varient en fonction de la technologie, de l'équipement et des applications visées. En général, si l'on combine toutes les applications, la poudre utilisée pour ces procédés aura des distributions granulométriques en nombre plus ou moins larges entre 5 et 150 µm.

En particulier, la fraction granulométrique en nombre obtenue à l'étape d) est comprise dans la gamme 15 - 53 µm. C'est une granulométrie adaptée au procédé de fusion sélective par laser (LBM pour Laser Beam Melting) et qui est compatible avec l'équipement utilisé et les applications visées. C'est une distribution granulométrique en nombre assez typique pour ce type d'utilisation de la poudre.

La présente invention concerne en outre un procédé de fabrication d'une pièce, en particulier de turbines, en superalliage à base de nickel, caractérisé en ce qu'il comprend les étapes suivantes :
A - fabrication de la poudre de superalliage à base de nickel selon la présente invention, avantageusement à l'aide du procédé selon la présente invention, en particulier tel que décrit ci-dessus,
B - soumission de la poudre obtenue à l'étape A à un procédé de fabrication additive, avantageusement choisi dans le groupe constitué par la fusion sélective par laser (LBM), la fusion par faisceau d'électrons (EBM) et la fusion laser par projection de poudre (aussi appelé dépôt de poudre ou CLAD),
C - soumission de la pièce obtenue à l'étape B à au moins un traitement thermique et/ou physique et/ou chimique, avantageusement choisi dans le groupe constitué par un traitement thermique de relaxation, en particulier de relaxation des contraintes résiduelles, un traitement de compaction isostatique à chaud, un traitement de mise en solution, un traitement de vieillissement et, un traitement de finition tel qu'un dépôt d'un revêtement de protection contre la corrosion et l'oxydation, avantageusement ledit traitement est un traitement de compaction isostatique à chaud (CIC),
D - récupération de la pièce ainsi obtenue.

Le procédé selon la présente invention peut en outre comprendre entre les étapes B et C une étape B1 de soudage des pièces obtenues avec le superalliage selon la présente invention.

Les procédés de fabrication additive utilisables dans le cadre de la présente invention, en particulier tels que la fusion sélective par laser, la fusion par faisceau d'électrons, la fusion laser par projection de poudre (dépôt de poudre ou CLAD) sont bien connus de l'homme du métier. Dans un mode de réalisation avantageux, l'étape B consiste en un procédé de fabrication additive qui comprend la fabrication couche par couche de la pièce par l'utilisation d'une source d'énergie (laser ou faisceau d'électrons) qui vient fondre une couche fine de la poudre de superalliage selon l'invention. Une seconde couche de poudre de superalliage selon l'invention est ensuite déposée puis fondue. Ce procédé est répété jusqu'à l'obtention de la pièce finale. Il s'agit avantageusement de la fusion sélective par laser.

Dans un autre mode de réalisation du procédé de fabrication d'une pièce, en particulier de turbines, en superalliage à base de nickel selon l'invention, l'étape A consiste en la fabrication d'un fil de superalliage à base de nickel selon la présente invention et l'étape B consiste en un procédé de fabrication additive qui comprend la fabrication couche par couche de la pièce par utilisation d'une source d'énergie (laser ou faisceau d'électrons) qui vient fondre le fil de superalliage obtenu à l'étape A. Une couche est ainsi constituée par fusion du fil continuellement déroulé, le fil étant fondu au fur et à mesure de son dévidage. La seconde couche est constituée sur la première couche. Ce procédé est répété jusqu'à l'obtention de la pièce finale.

Dans encore un autre mode de réalisation du procédé de fabrication d'une pièce, en particulier de turbines, en superalliage à base de nickel selon l'invention, l'étape A consiste en la fabrication d'une poudre et d'un fil de superalliage à base de nickel selon la présente invention et l'étape B consiste en un procédé de fabrication additive utilisant à la fois de la poudre et du fil de superalliage.

La présente invention concerne par ailleurs une pièce en superalliage à base de nickel obtenue à partir de la poudre et/ou du fil selon la présente invention et en particulier telle que décrite ci-dessus, avantageusement à l'aide du procédé selon la présente invention et en particulier tel que décrit ci-dessus.

De façon avantageuse, cette pièce est une pièce en 3D.

En particulier, il s'agit d'une pièce de turbine de moteurs d'avion, d'une pièce de turbine à gaz, ou d'une pièce de turbine de l'industrie marine.

Il peut ainsi s'agir d'une partie chaude d'une turbine, telle qu'une aube fixe ou mobile de turbine ou d'un disque de turbine, par exemple des turboréacteurs aéronautiques.

De façon avantageuse, la pièce en superalliage à base de nickel selon la présente invention présente :
- des propriétés mécaniques au moins égales à celles de l'alliage standard IN738LC, telles que par exemple une bonne résistance au fluage en température;
- une résistance à la corrosion et à l'oxydation au moins égale à celle de l'alliage standard IN738LC, telle que par exemple une bonne tenue à un environnement salin;
- l'absence de macro-fissures et/ou de micro-fissures ;
- une densité similaire à celle de l'alliage standard IN738LC, telle que par exemple environ 8,1 g/cm³ ;
- une température d'utilisation pouvant aller jusqu'à 1050-1100°C.

La présente invention concerne enfin l'utilisation de la pièce en superalliage à base de nickel selon la présente invention dans les turbines des moteurs d'avion, les turbines à gaz, ou les turbines de l'industrie marine, en particulier dans les parties chaudes des turbines.

L'invention sera mieux comprise à la lumière des figures et des exemples qui suivent, donnés à titre indicatif non limitatif.

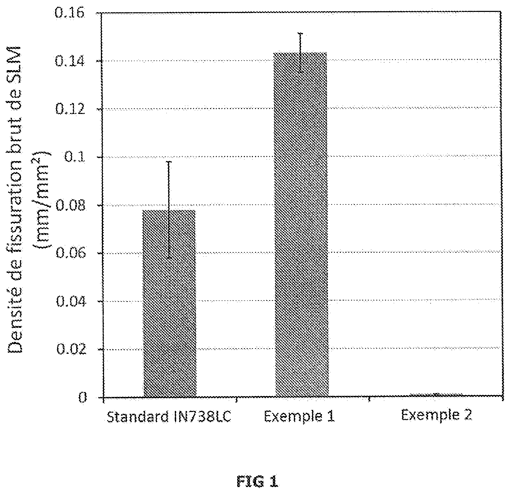

La Figure 1 représente la densité de microfissuration en mm/mm² liée à la fabrication par LBM (ou SLM), à l'état brut de LBM pour les exemples 1 et 2 et pour l'exemple comparatif (standard IN738LC).

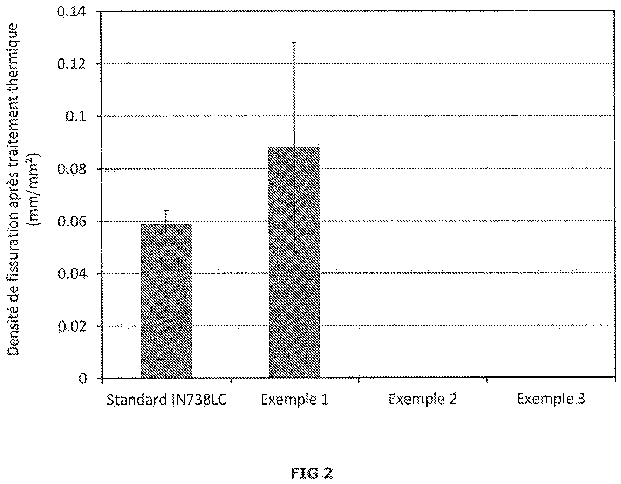

La Figure 2 représente la densité de microfissuration en mm/mm² mesurée après fabrication par LMB et traitement thermique, à l'état mise en solution et vieilli pour les exemples 1, 2 et 3 et pour l'exemple comparatif (standard IN738LC).

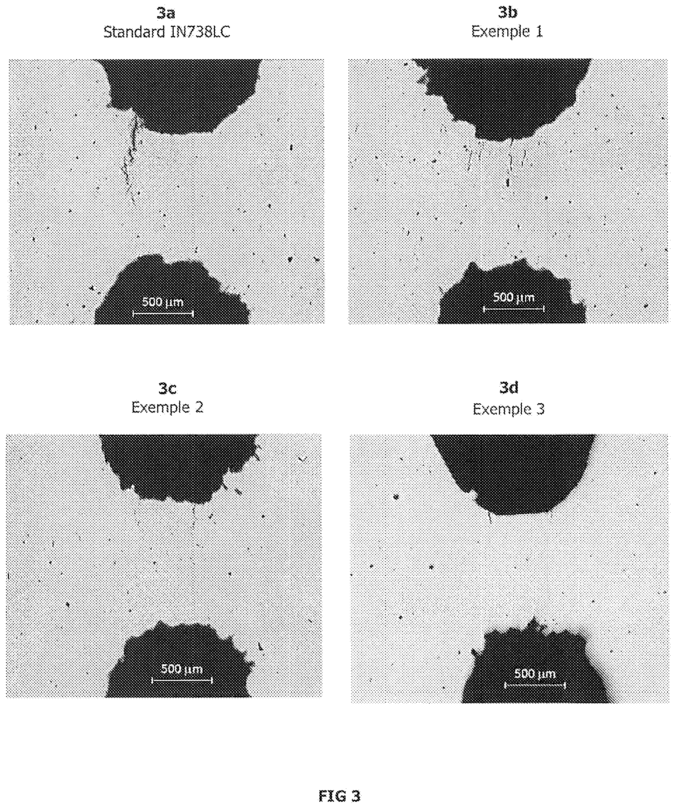

La Figure 3 représente des images de macrofissuration dans les zones de concentration de contraintes après traitement thermique ; obtenues par microscopie optique (Zeiss Axio Imager A2m avec Axiocam ICc5) à une résolution de 5 megapixels et un grandissement x50 après découpe et polissage des échantillons (exemples 1, 2 et 3 (Figures 3b 3c et 3d respectivement) et exemple comparatif : standard IN738LC (figure 3a)).

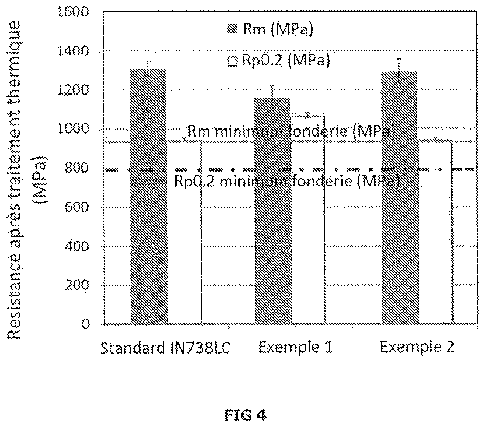

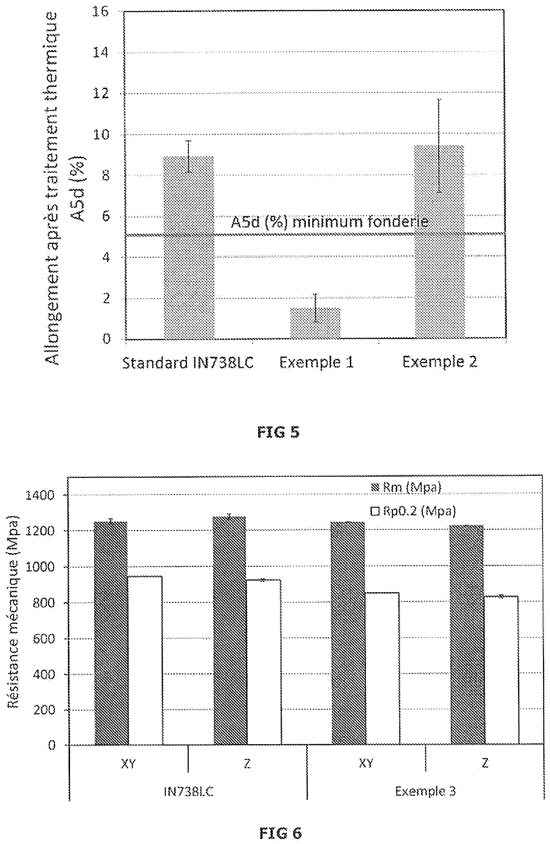

Les Figures 4 et 5 représentent les résultats d'essais de traction (résistance en MPa : Figure 4 et allongement A5d en % : Figure 5) à température ambiante (selon la norme NF EN 2002-001 de 2006) sur barreaux mis en solution et vieillis, pour 3 échantillons (exemples 1 et 2 et exemple comparatif : standard IN738LC) fabriqués selon l'axe XY (horizontal sur plateau).

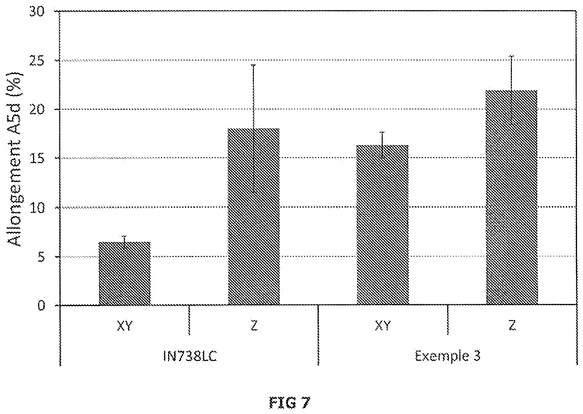

Les Figures 6 et 7 représentent les résultats d'essais de traction (résistance en MPa : Figure 6 et allongement A5d en % : Figure 7) à 650°C (selon la norme NF EN 2002-002) sur barreaux mis en solution et vieillis, pour l'exemple 3 et pour des données de l'état de l'art de l'exemple comparatif (IN738LC).

### Exemples

Trois exemples de poudre selon l'invention dont les compositions sont indiqués dans le Tableau 2 ci-dessous, ont été produites à partir de matières élémentaires dans les proportions maitrisées, en four VIM, puis atomisées à l'Argon.

**Tableau 2 : Composition des poudres pour superalliage à base de nickel en % en poids par rapport au poids total de la composition**

| | **Exemple 1** | **Exemple 2** | **Exemple 3** |
|---|---|---|---|
| **Ni + impuretés** | solde | solde | Solde |
| **Cr** | 15,66±0,08 | 15,72±0,24 | 15,78±0,08 |
| **Co** | 7,81±0,05 | 7,86±0,12 | 8,58±0,06 |
| **Mo** | 2,84±0,02 | 2,90±0,03 | 2,97±0,03 |
| **W** | 3,70±0,02 | 3,81±0,04 | 3,80±0,02 |
| **Al** | 3,74±0,01 | 3,24±0,04 | 3,23±0,01 |
| **Ti** | 3,01±0,02 | 3,10±0,04 | 3,20±0,02 |
| **Ta** | 1,85±0,01 | 1,94±0,02 | 1,90±0,01 |
| **Nb** | 0,778±0,005 | 0,495±0,005 | 0,526±0,005 |
| **C** | 0,0870±0,0026 | 0,0230±0,0016 | 0,0434±0,0004 |
| **B** | 0,0140±0,0028 | 0,00056±0,00012 | 0,0044±0,0008 |
| **Zr** | 0,0078±0,0016 | 0,000098±0,000020 | 0,0008±0,0002 |
| **Hf** | 0,179±0,001 | 0,00017±0,00004 | 0,00014±0,00003 |
| **Si** | 0,0250±0,0050 | 0,0210±0,0042 | 0,0280±0,0050 |
| **O** | 0,0110±0,0007 | 0,0110 ±0,0007 | 0,0121±0,0001 |
| **N** | 0,0055±0,0004 | 0,0019±0,0004 | 0,0059±0,0001 |
| **S** | <0,0005±0,0001 | <0,0005±0,0001 | <0,00067±0,0001 |
| **P** | 0,000018±0,000004 | 0,0002±0,00004 | 0,00014±0,00001 |

Outre l'abaissement des teneurs en Zr, Si, S et P, dont il a été démontré qu'il favorise le comportement à la fabrication additive, il a été mis en évidence les 3 axes suivants d'amélioration de la composition pour son aptitude à la fabrication additive et au traitement thermique : la baisse de Ti et Nb afin de diminuer la dureté de la phase γ' et/ou de Nb et C afin de diminuer la précipitation des carbures NbC toutes deux visant à réduire l'aptitude à la microfissuration pendant l'étape de fabrication additive ; l'augmentation de la teneur en Mo et W afin de ralentir la précipitation de γ' et renforcer la matrice afin de limiter l'aptitude à la macrofissuration pendant le traitement thermique. Ainsi l'exemple 1 comporte une augmentation des teneurs en Mo et W par rapport au standard IN738LC avec des teneurs standards par ailleurs et des éléments secondaires réduits au plus bas niveau. Les exemples 2 et 3 sont similaires à l'exemple 1 (augmentation de Mo et W) avec en plus, une baisse des teneurs en Nb et C par rapport au standard IN738LC. Ils ont, par ailleurs des teneurs standards et des éléments secondaires réduits au plus bas niveau. L'exemple 1 contient de plus, un ajout d'Hf par rapport au standard IN738LC afin de compenser l'abaissement du Zr par rapport au standard IN738LC et les potentielles conséquences néfastes sur la tenue en fluage du superalliage.

Un exemple comparatif de référence de poudre d'IN738LC obtenue par l'atomisation d'un lingot d'IN738LC approvisionné auprès de la société Brami a été fabriqué. Le procédé est le suivant : le lingot a été fondu en four VIM puis atomisé à l'Argon.

Le Tableau 3 suivant présente la composition de l'exemple comparatif de référence.

**Tableau 3 : Composition de l'exemple comparatif de référence IN738LC en % en poids par rapport au poids total de la composition**

| **Ni + impuretés** | solde |
|---|---|
| **Cr** | 16,21±0,37 |
| **Co** | 8,63±0,20 |
| **Mo** | 1,85±0,04 |
| **w** | 2,70±006 |
| **Al** | 3,44±0,05 |
| **Ti** | 3,40±0,06 |
| **Ta** | 1,88±0,06 |
| **Nb** | 0,88±0,02 |
| **C** | 0,0990±0,0030 |
| **B** | 0,0200±0,0040 |
| **Zr** | 0,0130±0,00026 |
| **Hf** | < limite de détection |
| **Si** | 0,0290±0,0058 |
| **O** | 0,0085±0,0005 |
| **N** | 0,0046±0,0009 |
| **s** | <0,0005±0,0001 |
| **P** | 0,00076±0,00015 |

Les 3 exemples selon l'invention et les exemples comparatifs ont, à l'état brut d'atomisation, une distribution granulométrique plus large que la distribution granulométrique visée pour l'application (ici SLM ou LBM). Elles ont donc été tamisées à 15 et 53 µm sous atmosphère inerte afin de sélectionner la fraction granulométrique 15-53 µm, connue par l'homme de l'art comme étant particulièrement adaptée à l'application SLM (ou LBM). Les analyses chimiques présentées dans les Tableaux 2 et 3 ont été réalisées sur les poudres finales après tamisage.

Les poudres ainsi obtenues (exemples 1, 2 et 3 et exemple comparatif) ont été utilisées pour la fabrication d'éprouvettes technologiques représentatives de l'application et d'ébauches d'éprouvettes de traction de dimensions 13mm x 13mm x 70mm par fabrication additive LBM de type EOS M290 avec une épaisseur de couche de 40 µm et une puissance laser de 250-370 W, la séparation des ébauches ainsi obtenues du plateau de fabrication par électroérosion suivie du traitement thermique standard de l'alliage IN738LC consistant en une mise en solution à 1120°C (conditions subsolvus) pendant 2h suivi d'un refroidissement air, puis un vieillissement à 845°C pendant 24h suivi d'un refroidissement air avant leur usinage selon les géométries d'éprouvettes correspondant aux normes d'essais pour les tractions à l'ambiante (NF EN 2002-001) et à 650°C (NF EN 2002-002) et pour les essais de fluage rupture (NF EN 2002-005).

### Microfissuration

La densité des microfissures en mm/mm² a été mesurée par analyse d'images prises au microscope optique avec un grandissement x50 sur les éprouvettes technologiques brutes après fabrications additives et après traitement thermique à l'état mise en solution (à 1120°C pendant 2h suivi d'un refroidissement air) et vieilli (à 845°C pendant 24h suivi d'un refroidissement air) et les résultats sont représentées respectivement dans les Figures 1 et 2 pour les exemples 1 et 2 et l'exemple comparatif et l'exemple 3. La longueur totale de fissures observées est rapportée à la surface de matériau considérée.

L'échantillon de référence (exemple comparatif standard IN738LC) permet de situer l'état de l'art de l'IN738LC à une densité de microfissures d'environ 0,08 mm/mm². L'exemple 2, avec les abaissements de Nb et C, permet bien d'éviter la microfissuration pendant l'étape de fabrication additive, à iso paramètres LBM.

Les valeurs mesurées sur la Figure 2 après traitement thermique sont un peu inférieures à celles mesurées sur matériau brut de fabrication (figure 1) mais elles restent totalement en adéquation et les échantillons sont différents. Et l'on retrouve bien l'IN738LC standard et l'exemple 1 qui présentent des micro fissures tandis que les exemples 2 et 3 ne fissurent pas. Ceci est bien en cohérence avec les données obtenues sur matériau brut de LBM.

### Macrofissuration

Comme visualisée sur la Figure 3 l'échantillon produit avec l'IN738LC de référence présente une macrofissure dans la zone de contraintes directement liée à la perte de ductilité de l'alliage lors de la précipitation massive de phase γ' lors de la mise en solution. Les exemples 1, 2 et 3, avec une augmentation des teneurs en Mo et W vis-à-vis de l'IN738LC standard respectivement d'environ 50 à 60% et 35 à 40% présentent un très net abaissement de la macrofissuration après traitement thermique. La démarche de ralentissement de la précipitation de la phase γ' et le renforcement de la matrice γ permettent bien d'atteindre l'objectif de réduction des fissures au traitement thermique.

Le Tableau 4 résume les différentes stratégies d'amélioration revendiquées pour la réduction de la microfissuration et de la macrofissuration et leur découpage entre les trois exemples présentés et montre que la coordination des stratégies anti micro fissuration (abaissement de a) Nb et Ti ou b) de Nb et C, et réduction des éléments Zr, Si, S et P) et anti macro fissuration (augmentation des teneurs en Mo et W) est particulièrement avantageux pour obtenir un matériau sain après fabrication par LBM suivi d'un traitement thermique de mise en solution et vieillissement.

**Tableau 4 - Matrice des améliorations apportées sur les différents exemples et résultats associés en termes de microfissuration et macrofissuration**

| | **Exemple 1** | **Exemple 2** | **Exemple 3** |
|---|---|---|---|
| Baisse Zr, Si, S, P | X | X | X |
| Baisse Nb et C | | X | X |
| Augmentation Mo et W | X | X | X |
| Résultats | Présence de microfissuration Très faible macrofissuration dans la zone de concentration de contraintes | Absence de microfissuration Très faible macrofissuration dans la zone de concentration de contraintes | Absence de microfissuration Très faible macrofissuration dans la zone de concentration de contraintes |

Par ailleurs il est à remarquer que les inventeurs ont testé un exemple comparatif 1 comportant uniquement une baisse des teneurs en Ti et Nb par rapport au standard IN738LC mais ne comportant pas d'augmentation de Mo et W. Cet exemple comparatif a montré la présence de macrofissures dans la zone de concentration des contraintes après traitement thermique.

### Essais de traction

Sur les Figures 4 et 5 il est observé une relative stabilité en résistance mécanique (Rm et Rp 0,2) des exemples 1 et 2 vis-à-vis de l'IN738LC de référence et des valeurs qui dépassent toutes très largement la spécification pour l'IN738LC de fonderie. L'allongement de l'exemple 2 est supérieur à celui de l'IN738LC de référence tandis que celui de l'exemple 1, très fortement impacté par la microfissuration est dégradé. Enfin, le lot de référence, exemple 2 est au-delà de la spécification de l'IN738LC de fonderie. Ses propriétés mécaniques ne sont donc pas dégradées suite à ces modifications de composition.

Les Figures 6 et 7 présentent les résultats d'essais de traction à 650°C pour l'exemple 3 et pour une série d'essais réalisés sur l'exemple comparatif (IN738LC standard) constituant un état de l'art de l'alliage standard mis en forme par fusion laser sur lit de poudre, en fonction de l'axe de fabrication des pièces (XY : axe horizontal sur plateau, Z : axe vertical sur plateau). Les éprouvettes considérées ayant subi un traitement de mise en solution subsolvus, il n'y a pas de recristallisation ni de croissance des grains métallurgiques obtenus lors de la solidification. Ceux-ci restent donc fortement orientés selon l'axe de fabrication des pièces (axes Z) et leur morphologie dépend des paramètres de fabrication utilisés. Les propriétés sont du même ordre dans les deux directions de fabrication avec des différences mineures explicables par des différences de paramétries LBM.

### Essais de Fluage rupture

Les durées de vie obtenues par des essais de fluage rupture dans des conditions extrêmes (760°C/585MPa) sur des éprouvettes fabriquées selon l'axe Z (verticale par rapport au plateau) ou l'axe XY (horizontale par rapport au plateau) pour l'exemple 3 et l'exemple comparatif (IN738LC) sont présentées dans les tableaux 5 et 6 suivants.

**Tableau 5 - Durée de vie moyenne et écart type en fluage rupture à 760°C/585MPa pour l'Exemple 3**

| Orientation | Nombre d'éprouvettes | Durée de vie (h) |
|---|---|---|
| XY | 5 | 4,7±0,7 |
| Z | 5 | 12,9±1,1 |

**Tableau 6 - Durée de vie moyenne en fluage rupture à 760°C/585MPa pour l'IN738LC**

| Orientation | Durée de vie (h) |
|---|---|
| XY | 0,03 |
| Z | 2,5 |

Les deux matériaux sont dans des gammes de durées de vie similaires, l'exemple 3 étant légèrement supérieur à l'IN738LC.

## Revendications

1. Superalliage à base de nickel à forte teneur en phase γ' destiné à la fabrication de pièces par fabrication additive suivie d'un traitement thermique, **caractérisé en ce que** sa composition comprend, avantageusement est constitué essentiellement de, en pourcentages en poids de la composition totale:
Chrome : 15,5 - 16,5
Cobalt : 7,7 - 11, avantageusement 7,7 - 9 ;
du molybdène et du tungstène telle que la teneur en molybdène + tungstène = 5,5 - 7,5, avantageusement 6,2 - 7,5 ;
Aluminium : 2,9 - 4,3, avantageusement 3 - 4;
Titane : 2,6 - 3,2, avantageusement 2,6 - 3,1 ;
Tantale : 1,5 - 2,2 ;
Niobium : 0,3 - 1,1, avantageusement 0,3- 0,5 ;
Carbone : 0,01 - 0,13, avantageusement 0,01 - 0,07 ;
Bore : 0,0005 - 0,015;
Zirconium : ≤ 0,01, avantageusement ≤ 0,009 ;
Hafnium : 0,0001 - 0,5, avantageusement 0,0001 - 0,2 ;
Silicium : ≤ 0,06, avantageusement ≤ 0,03 ;
Nickel : solde
ainsi que les impuretés inévitables.

2. Superalliage à base de nickel selon la revendication 1, **caractérisé en ce que** sa composition comprend, avantageusement **en ce qu'**elle est constituée essentiellement de, en pourcentages en poids de la composition totale:
Chrome : 15,5 - 16,5
Cobalt : 7,7 - 9 ;
du molybdène et du tungstène telle que la teneur en molybdène + tungstène = 6,2 - 7,5 ;
Aluminium : 3 - 4 ;
Titane : 2,6 - 3,1 ;
Tantale : 1,5 - 2,2 ;
Niobium : 0,3 - 0,5 ;
Carbone : 0,01 - 0,07;
Bore : 0,0005 - 0,005 ;
Zirconium : ≤ 0,009 ;
Hafnium : 0,0001 - 0,2 ;
Silicium : ≤ 0,03 ;
Nickel : solde
ainsi que les impuretés inévitables.

3. Superalliage à base de nickel selon l'une quelconque des revendications 1 ou 2, **caractérisé en ce que** sa teneur en molybdène est de 2,5 - 3,5 avantageusement 2,7 - 3,5, en pourcentages en poids de la composition totale.

4. Superalliage à base de nickel selon l'une quelconque des revendications 1 à 3, **caractérisé en ce que** sa teneur en tungstène est de 3 - 4 avantageusement 3,5 - 4, en pourcentages en poids de la composition totale.

5. Superalliage à base de nickel selon l'une quelconque des revendications 1 à 4, **caractérisé en ce que** les impuretés inévitables sont choisies dans le groupe constitué par l'azote, l'oxygène, l'hydrogène, le plomb, le soufre, le phosphore, le fer, le manganèse, le cuivre, l'argent, le bismuth, le platine, le sélénium, l'étain, le magnésium et leurs mélanges.

6. Superalliage à base de nickel selon l'une quelconque des revendications 1 à 5, **caractérisé en ce que** :
sa teneur en Azote ≤ 0,030 % et
sa teneur en Oxygène ≤ 0,030 %.

7. Superalliage à base de nickel selon l'une quelconque des revendications 1 à 6, **caractérisé en ce qu'**il se trouve sous la forme de poudre.

8. Superalliage à base de nickel selon l'une quelconque des revendications 1 à 6, **caractérisé en ce qu'**il se trouve sous la forme de fil.

9. Procédé de fabrication de la poudre de superalliage à base de nickel selon la revendication 7 comprenant les étapes suivantes :
a- mélange de matières premières élémentaires ou pré alliées,
b- fusion du mélange obtenue à l'étape a), avantageusement dans un four à induction sous vide,
c- atomisation au gaz, avantageusement à l'argon, du produit obtenu à l'étape b),
d- tamisage de la poudre obtenue à l'étape c) de façon à obtenir la granulométrie désirée,
e- récupération de la poudre obtenue.

10. Procédé de fabrication d'une pièce, en particulier de turbines, en superalliage à base de nickel, comprenant les étapes suivantes :
A - fabrication de la poudre de superalliage à base de nickel selon la revendication 7, avantageusement à l'aide du procédé selon la revendication 9,
B - soumission de la poudre obtenue à l'étape A à un procédé de fabrication additive, avantageusement choisi dans le groupe constitué par la fusion sélective par laser (LBM), la fusion par faisceau d'électrons (EBM) et la fusion laser par projection de poudre (CLAD),
C - soumission de la pièce obtenue à l'étape B à au moins un traitement thermique et/ou physique et/ou chimique, avantageusement choisi dans le groupe constitué par un traitement thermique de relaxation, un traitement de compaction isostatique à chaud, un traitement de mise en solution, un traitement de vieillissement et un traitement de finition tel qu'un dépôt d'un revêtement de protection contre la corrosion et l'oxydation, en particulier un traitement de compaction isostatique à chaud,
D - récupération de la pièce ainsi obtenue.

11. Procédé selon la revendication 10, **caractérisé en ce que** l'étape B est une fusion sélective par laser (LBM).

12. Pièce en superalliage à base de nickel obtenue à partir de la poudre selon la revendication 7, avantageusement à l'aide du procédé selon l'une quelconque des revendications 10 ou 11, ou obtenue à partir du fil selon la revendication 8.

13. Pièce selon la revendication 12, **caractérisée en ce qu'**elle est exempte de macrofissures et avantageusement de microfissures.

14. Utilisation de la pièce en superalliage à base de nickel selon l'une quelconque des revendications 12 ou 13 dans les turbines des moteurs d'avion, les turbines à gaz, les turbines terrestres et les turbines de l'industrie marine.

## Patentansprüche

1. Superlegierung auf Nickelbasis mit einem hohen Gehalt an γ'-Phase, die für die Herstellung von Teilen durch additive Fertigung mit anschließender Wärmebehandlung bestimmt ist, **dadurch gekennzeichnet, dass** ihre Zusammensetzung in Gewichtsprozent der Gesamtzusammensetzung umfasst, vorteilhafterweise im Wesentlichen besteht aus:
Chrom: 15,5 - 16,5
Kobalt: 7,7 - 11, vorteilhafterweise 7,7 - 9,
Molybdän und Wolfram, derart, dass der Gehalt an Molybdän + Wolfram = 5,5 - 7,5, vorteilhafterweise 6,2 - 7,
Aluminium : 2,9 - 4,3, vorteilhafterweise 3 - 4,
Titan : 2,6 - 3,2, vorteilhafterweise 2,6 - 3,1,
Tantal: 1,5 - 2,2,
Niob: 0,3 - 1,1, vorteilhafterweise 0,3 - 0,5,
Kohlenstoff: 0,01 - 0,13, vorteilhafterweise 0,01 - 0,07,
Bor: 0,0005 - 0,015,
Zirkonium : ≤ 0,01, vorteilhafterweise ≤ 0,009,
Hafnium : 0,0001 - 0,5, vorteilhafterweise 0,0001 - 0,2,
Silizium : ≤ 0,06, vorteilhafterweise ≤ 0,03,
Nickel : Rest
sowie die unvermeidbaren Verunreinigungen.

2. Superlegierung auf Nickelbasis nach Anspruch 1, **dadurch gekennzeichnet, dass** ihre Zusammensetzung in Gewichtsprozent der Gesamtzusammensetzung umfasst, vorteilhafterweise im Wesentlichen besteht aus:
Chrom: 15,5 - 16,5,
Kobalt: 7,7 - 9,
Molybdän und Wolfram, derart, dass der Gehalt an Molybdän + Wolfram = 6,2 - 7,5,
Aluminium: 3 - 4,
Titan: 2,6 - 3,1,
Tantal: 1,5 - 2,2,
Niob: 0,3 - 0,5,
Kohlenstoff: 0,01 - 0,07,
Bor: 0,0005 - 0,005,
Zirkonium: ≤ 0,009,
Hafnium : 0,0001 - 0,2 ;
Silizium: ≤ 0,03,
Nickel: Rest
sowie die unvermeidbaren Verunreinigungen.

3. Superlegierung auf Nickelbasis nach einem der Ansprüche 1 oder 2, **dadurch gekennzeichnet, dass** ihr Gehalt an Molybdän 2,5 - 3,5, vorzugsweise 2,7 - 3,5, in Gewichtsprozent der Gesamtzusammensetzung beträgt.

4. Superlegierung auf Nickelbasis nach einem der Ansprüche 1 bis 3, **dadurch gekennzeichnet, dass** ihr Gehalt an Wolfram 3 - 4, vorzugsweise 3,5 - 4, in Gewichtsprozent der Gesamtzusammensetzung beträgt.

5. Superlegierung auf Nickelbasis nach einem der Ansprüche 1 bis 4, **dadurch gekennzeichnet, dass** die unvermeidbaren Verunreinigungen ausgewählt sind aus der Gruppe bestehend aus Stickstoff, Sauerstoff, Wasserstoff, Blei, Schwefel, Phosphor, Eisen, Mangan, Kupfer, Silber, Wismut, Platin, Selen, Zinn, Magnesium und deren Mischungen.

6. Superlegierung auf Nickelbasis nach einem der Ansprüche 1 bis 5, **dadurch gekennzeichnet, dass**:
ihr Gehalt an Stickstoff ≤ 0,030 % ist und
ihr Gehalt an Sauerstoff ≤ 0,030 % ist.

7. Superlegierung auf Nickelbasis nach einem der Ansprüche 1 bis 6, **dadurch gekennzeichnet, dass** sie in Form von Pulver vorliegt.

8. Superlegierung auf Nickelbasis nach einem der Ansprüche 1 bis 6, **dadurch gekennzeichnet, dass** sie in Form von Draht vorliegt.

9. Verfahren zur Herstellung des Pulvers aus Superlegierung auf Nickelbasis nach Anspruch 7, umfassend die folgenden Schritte:
a- Mischen von elementaren oder vorlegierten Rohstoffen,
b- Schmelzen der in Schritt a) erhaltenen Mischung, vorteilhafterweise in einem Vakuum-Induktionsofen,
c- Gaszerstäubung, vorteilhafterweise mit Argon, des in Schritt b) erhaltenen Produkts,
d- Sieben des in Schritt c) erhaltenen Pulvers, um die gewünschte Korngröße zu erhalten,
e- Auffangen des erhaltenen Pulvers.

10. Verfahren zur Herstellung eines Teils, insbesondere von Turbinen, aus Superlegierung auf Nickelbasis, umfassend die folgenden Schritte:
A- Herstellen des Pulvers aus Superlegierung auf Nickelbasis nach Anspruch 7, vorteilhafterweise mit Hilfe des Verfahrens nach Anspruch 9,
B- Unterziehen des in Schritt A erhaltenen Pulvers einem additiven Herstellungsverfahren, vorteilhafterweise ausgewählt aus der Gruppe bestehend aus selektivem Laserschmelzen (LBM), Elektronenstrahlschmelzen (EBM) und Laserschmelzen durch Pulverspritzen (CLAD),
C- Unterziehen des in Schritt B erhaltenen Teils wenigstens einer thermischen und/oder physikalischen und/oder chemischen Behandlung, vorteilhafterweise ausgewählt aus der Gruppe bestehend aus einer thermischen Entspannungsbehandlung, einer heißisostatischen Verdichtungsbehandlung, einer Lösungsbehandlung, einer Alterungsbehandlung und eine Nachbehandlung wie ein Abscheiden einer Schutzbeschichtung gegen Korrosion und Oxidation, insbesondere einer heißisostatischen Verdichtungsbehandlung,
D- Gewinnen des so erhaltenen Produkts.

11. Verfahren nach Anspruch 10, **dadurch gekennzeichnet, dass** Schritt B ein selektives Laserschmelzen (LBM) ist.

12. Teil aus Superlegierung auf Nickelbasis, das aus dem Pulver nach Anspruch 7, vorteilhafterweise mit Hilfe des Verfahrens nach einem der Ansprüche 10 oder 11 erhalten wird oder aus dem Draht nach Anspruch 8 erhalten wird.

13. Teil nach Anspruch 12, **dadurch gekennzeichnet, dass** es frei von Makrorissen und vorteilhafterweise von Mikrorissen ist.

14. Verwendung des Teils aus Superlegierung auf Nickelbasis nach einem der Ansprüche 12 oder 13, in Turbinen von Flugzeugtriebwerken, Gasturbinen, Landturbinen und Turbinen der Schiffsindustrie.

## Claims

1. A nickel-based superalloy with high γ' phase content, intended for the manufacture of components by additive manufacturing followed by heat treatment, **characterized in that** its composition comprises, advantageously consists essentially of, in percentages by weight of the total composition:
chromium: 15.5 - 16.5;
cobalt: 7.7 - 11, advantageously 7.7 - 9;
molybdenum and tungsten such that the molybdenum + tungsten content = 5.5 - 7.5, advantageously 6.2 - 7.5;
aluminum: 2.9 - 4.3, advantageously 3 - 4;
titanium: 2.6 - 3.2, advantageously 2.6 - 3.1;
tantalum: 1.5 - 2.2;
niobium: 0.3 - 1.1, advantageously 0.3 - 0.5;
carbon: 0.01 - 0.13, advantageously 0.01 - 0.07;
boron: 0.0005 - 0.015;
zirconium: ≤ 0.01, advantageously ≤ 0.009;
hafnium: 0.0001 - 0.5, advantageously 0.0001 - 0.2;
silicon: ≤ 0.06, advantageously ≤ 0.03;
nickel: balance
and also the unavoidable impurities.

2. The nickel-based superalloy as claimed in claim 1, **characterized in that** its composition comprises, advantageously **in that** it consists essentially of, in percentages by weight of the total composition:
chromium: 15.5 - 16.5;
cobalt: 7.7 - 9;
molybdenum and tungsten such that the molybdenum + tungsten content = 6.2 - 7.5;
aluminum: 3 - 4;
titanium: 2.6 - 3.1;
tantalum: 1.5 - 2.2;
niobium: 0.3 - 0.5;
carbon: 0.01 - 0.07;
boron: 0.0005 - 0.005;
zirconium: ≤ 0.009;
hafnium: 0.0001 - 0.2;
silicon: ≤ 0.03;
nickel: balance
and also the unavoidable impurities.

3. The nickel-based superalloy as claimed in either of claims 1 and 2, **characterized in that** its molybdenum content is 2.5 - 3.5, advantageously 2.7 - 3.5, in percentages by weight of the total composition.

4. The nickel-based superalloy as claimed in any one of claims 1 to 3, **characterized in that** its tungsten content is 3 - 4, advantageously 3.5 - 4, in percentages by weight of the total composition.

5. The nickel-based superalloy as claimed in any one of claims 1 to 4, **characterized in that** the unavoidable impurities are selected from the group consisting of nitrogen, oxygen, hydrogen, lead, sulfur, phosphorus, iron, manganese, copper, silver, bismuth, platinum, selenium, tin, magnesium, and mixtures thereof.

6. The nickel-based superalloy as claimed in any one of claims 1 to 5, **characterized in that**:
its nitrogen content ≤ 0.030% and
its oxygen content ≤ 0.030%.

7. The nickel-based superalloy as claimed in any one of claims 1 to 6, **characterized in that** it is in the form of powder.

8. The nickel-based superalloy as claimed in any one of claims 1 to 6, **characterized in that** it is in the form of wire.

9. A method for manufacturing the nickel-based superalloy powder as claimed in claim 7, comprising the following steps:
a - mixing elemental or prealloyed starting materials,
b - melting the mixture obtained in step a), advantageously in a vacuum induction furnace,
c - gas-atomizing the product obtained in step b), advantageously with argon,
d - sieving the powder obtained in step c) so as to obtain the desired particle size,
e - recovering the resulting powder.

10. A method for manufacturing a component, more particularly turbines, from nickel-based superalloy, comprising the following steps:
A - manufacturing the nickel-based superalloy powder as claimed in claim 7, advantageously by means of the method as claimed in claim 9,
B - subjecting the powder obtained in step A to an additive manufacturing process, advantageously selected from the group consisting of selective laser melting (LBM), electron beam melting (EBM), and laser melting by powder spraying (CLAD),
C - subjecting the component obtained in step B to at least one thermal and/or physical and/or chemical treatment, advantageously selected from the group consisting of a relaxation heat treatment, a hot isostatic pressing treatment, a solution treatment, an aging treatment, and a finishing treatment such as application of a coating providing protection against corrosion and oxidation, more particularly a hot isostatic pressing treatment,
D - recovering the resultant component.

11. The method as claimed in claim 10, **characterized in that** step B is a selective laser melting (LBM).

12. A nickel-based superalloy component obtained from the powder as claimed in claim 7, advantageously by means of the method as claimed in either of claims 10 and 11, or obtained from the wire as claimed in claim 8.

13. The component as claimed in claim 12, **characterized in that** it is free of macrocracks and advantageously of microcracks.

14. The use of the nickel-based superalloy component as claimed in either of claims 12 and 13 in aircraft engine turbines, gas turbines, terrestrial turbines, and marine industry turbines.
